# EUROPEAN PATENT APPLICATION

(11) **EP 1 918 802 A1**
(43) Date of publication of application: **07.05.2008**
(21) Application number: 06123203.9
(22) Date of filing: 30.10.2006
(51) Int. Cl.: G06F 3/033

(54) **Method of improved viewing of visual objects on a display by enlarging a focused object**

(71) Applicant: Research In Motion Limited, Waterloo, Ontario N2L 3W8 (CA)
(72) Inventor: Scott, Sheryl Lee Lorraine, Toronto, Ontario M5T 1Y9 (CA)
(74) Representative: Roberts, Gwilym Vaughan

(57) **Abstract**

An improved handheld electronic device and method facilitate use of the handheld electronic device by visually outputting certain visual objects on the display in an enlarged fashion. Icons and clickable buttons can be enlarged when a visual focus is thereon to indicate that a received selection input will initiate the function represented by the icon or clickable button. In other situations, such as when a particular input field is the subject of an input focus, the label associated with the particular input field can be enlarged to thereby indicated that its associated input field is the subject of the input focus. In another situation the visual object that may be the subject of the visual focus of the system can be a sentence in a passage of text, with navigational or other inputs successively shifting the visual focus to successive sentences, and thereby causing the successive sentences to be depicted in an enlarged fashion.

## Description

### BACKGROUND

### Field

The disclosed and claimed concept relates generally to handheld electronic devices and, more particularly, to a method of facilitating the viewing of subject matter output on a display of a handheld electronic device.

### Related Art

Numerous types of handheld electronic devices are known. Examples of such handheld electronic devices include, for instance, personal data assistants (PDAs), handheld computers, two-way pagers, cellular telephones, and the like. Many handheld electronic devices also feature a wireless communication capability, although many such handheld electronic devices are stand-alone devices that are functional without communication with other devices.

Handheld electronic devices typically are configured to be relatively small, i.e., handheld, and thus oftentimes have physically small components such as keypads and displays. As such, users can occasionally have difficulty viewing certain of the details on the display screen. This situation is exacerbated by the fact that users oftentimes are able to pay only a limited amount of attention to a display of a handheld electronic device during use because, for instance, the user may be doing other things such as walking, participating in a meeting, etc. It thus would be desired to provide an improved method and handheld electronic device wherein the user is more readily able to see certain subject matter that is output on a display.

### BRIEF DESCRIPTION OF THE DRAWING

A full understanding of the disclosed and claimed concept can be gained from the following Description when read in conjunction with the accompanying drawings in which:

Fig. 1 is an improved handheld electronic device in accordance with the disclosed and claimed concept and having an exemplary output on a display thereof;

Fig. 2 is a schematic depiction of the handheld electronic device of Fig. 1;

Fig. 3 is a depiction of another exemplary output on the display of the handheld electronic device of Fig. 1;

Fig. 4 is a view of another exemplary output on the display;

Fig. 4A is a view of another exemplary output on the display;

Fig. 4B is a view of another exemplary output on the display;

Fig. 5 is a view of another exemplary output on the display;

Fig. 6 is a view of another exemplary output on the display;

Fig. 7 is a view of another exemplary output on the display;

Fig. 8 is a view of another exemplary output on the display;

Fig. 9 is a view of another exemplary output on the display;

Fig. 10 is a view of another exemplary output on the display; and

Fig. 11 is a view of another exemplary output on the display.

Similar numerals refer to similar parts throughout the specification.

### DESCRIPTION

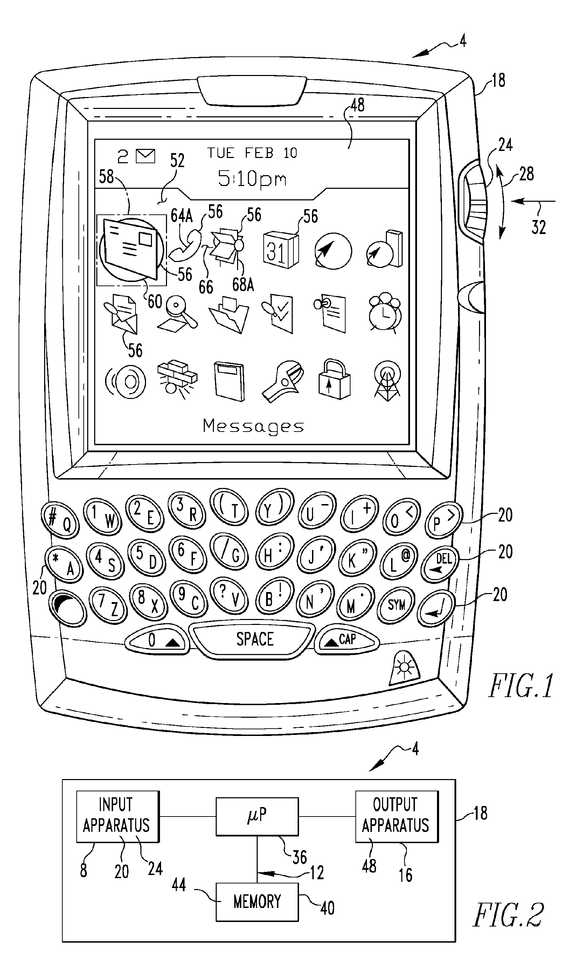

An improved handheld electronic device 4 in accordance with the disclosed and claimed concept is depicted generally in Fig. 1 and is depicted schematically in Fig. 2. The handheld electronic device 4 comprises an input apparatus 8, a processor apparatus 12, and an output apparatus 16, all of which are disposed on a case 18. The input apparatus 8 is structured to provide input signals to the processor apparatus 12. The output apparatus 16 is structured to receive output signals from the processor apparatus 12 and to responsively provide output.

The input apparatus 8 comprises a plurality of actuatable keys 20 and a track wheel 24. The track wheel 24 is rotatable as is indicated at the numeral 28 to provide navigational inputs and other inputs to the processor apparatus 12. The track wheel 24 additionally is translatable in a direction toward the case 18, as is indicated at the numeral 32, to provide selection inputs and other inputs to the processor apparatus 12. It is noted that other input devices such as track balls, joysticks, and the like could be provided in place of or in addition to the track wheel 24 without departing from the present concept.

The processor apparatus 12 comprises a processor 36 and a memory 40 within which are stored are a number of routines 44. As employed herein, the expression "a number of" and variations thereof shall refer broadly to any nonzero quantity, including a quantity of one. The routines 44 are executable on the processor 36.

The output apparatus 16 comprises a display 48 which can be any of a wide variety of display devices such as LCD, and the like. In Fig. 1, the display 48 has a first output 52 displayed thereon, with the first output 52 comprising a number of visual objects which include a plurality of icons 56. It can be seen that one of the icons 56 is an initial icon 60 that appears larger than any of the other icons 56 and is depicted as being surrounded by a box 58. The box 58 is indicative of a visual focus being on the initial icon 60. Hereinafter, the expression "visual focus" and variations thereof shall refer broadly to a visual object, such as in a graphical user interface (GUI), that is currently selected, is currently selectable, or is otherwise the subject of special treatment by the processor apparatus 12. Since the visual focus is on the initial icon 60, a selection input from the track wheel 24, such as might result from translating or clicking the track wheel 24 in the direction of the arrow 32, will cause the routine 44 that is represented by the initial icon 60 to be executed on the processor 36. The box 58 is depicted herein for purposes of explanation and may or may not actually be output on the display 48.

In Fig. 1, the initial icon 60 is depicted as being larger than a first icon 64A and a second icon 68A therein. Fig. 1 depicts the first and second icons 64A and 68A as being roughly of the same size. The relatively larger size of the initial icon 60 in Fig. 1 advantageously visually indicates to a user that in Fig. 1 the visual focus is on the initial icon 60. Such relative enlargement of a visual object is advantageous because it highlights to a user the visual object that the user is trying to view. This is particularly useful for users who are, for instance, visually impaired or otherwise impaired.

Fig. 1 also depicts a space 66, i.e., a blank region, between the first and second icons 64A and 68A. The spacing between any adjacent pair of icons 56 is roughly the same as the space 66 between the first and second icons 64A and 68A in Fig. 1, except that the relatively larger initial icon 60 in Fig. 1 is disposed relatively closer to its adjacent icons than could be accommodated by the space 66 of Fig. 1.

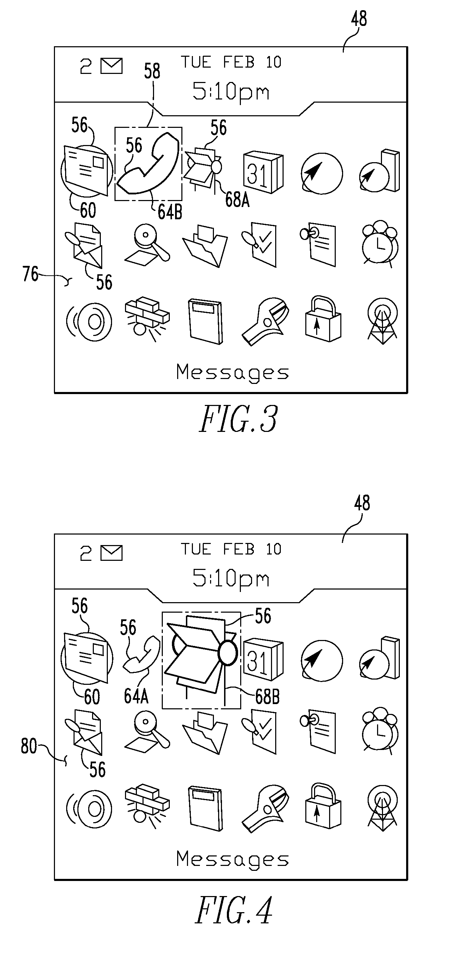

Fig. 3 depicts a second output 76 on the display 48. The second output 76 comprises the icons 56, with the first icon 64B being an enlarged version of the first icon 64A of Fig. 1. Such enlargement indicates that the visual focus in Fig. 3 is on the first icon 64B rather than on the initial icon 60. It can also be seen that the initial icon 60 in Fig. 3 is no longer enlarged as in Fig. 1, which further visually indicates to a user that the visual focus no longer is on the initial icon 60 or on the routine 44 that it represents. The second icon 68A in Fig. 3 is the same size as it was depicted at the numeral 68A in Fig. 1.

The visual focus could have been shifted from the initial icon 60 in Fig. 1 to the first icon 64B in Fig. 3 by rotating the track wheel 24 in the direction indicated at the numeral 28 to provide, for instance, a navigational input 28 to the processor apparatus 12. Since the visual focus has been shifted from the initial icon 60 in Fig. 1 to the first icon 64 in Fig. 3, the processor apparatus 12 has provided to the output apparatus 16 instructions indicating that the enlarged initial icon 60 in Fig. 1 should be redisplayed in its default, i.e., relatively smaller, size in Fig. 3, and that the first icon 64A depicted in Fig. 1 at its default, i.e., relatively smaller size, should be redisplayed in Fig. 3 in an enlarged form as the first icon 64B.

The change in size of the visual objects such as the icons 56 between the initial size thereof and the enlarged size thereof could be depicted as, for example, a given icon 56 displayed at the initial size being redisplayed at the enlarged size, and vice-versa. Alternatively, a visual object such as a given icon 56 could be depicted as progressively changing in size between the initial size and the enlarged size. For instance, the given icon 56 could be depicted as gradually growing in size from the initial size to the enlarged size, and as gradually shrinking in size from the enlarged size to the initial size. Other variations will be apparent.

Also, the change in size of a given visual object between the initial and enlarged sizes need not occur immediately upon the visual focus being on the given visual object or being removed from the given visual object. For instance, the system might visually depict the change in size of a given visual object between the initial and enlarged sizes only after the visual focus has remained on the given visual object or another visual object for a predetermined period of time. This would be helpful if, for instance, the user is quickly scrolling past a number of visual objects without waiting, because it would avoid unnecessarily enlarging visual objects in which the user is not interested, thereby avoiding the processing burden and the visual distraction of numerous visual objects being depicted as quickly shifting between initial and enlarged sizes.

The initial icon 60, the first icon 64A and 64B, and the second icon 68A are each depicted at the same position on the display 48 relative to one another in each of Figs. 1 and 3. It can be seen, however, from Fig. 3 that the first icon 64B in an enlarged form occupies at least a portion of the space 66 of Fig. 1. In this regard, it can be seen that the icons 56 in their default, i.e., relatively smaller, size are spaced apart from one another sufficiently to enable each to be visually distinguished from one another. When the visual focus moves to a particular icon 56, such as to the icon 64B in Fig. 3, the enlargement of the first icon 64B helps to visually highlight the first icon 64B from the other non-enlarged icons 56, and to highlight in the user's mind the particular routine 44 which is represented by the first icon 64B that is currently the subject of the visual focus. Additionally in Fig. 3, by occupying at least a portion of the space 66 that was present between the first and second icons 64A and 68A in Fig. 1, the enlarged first icon 64B is disposed closer to the icons 56 that are adjacent thereto. Such a visual distinction in the spacing among the icons 56 provides a visual aberration on the display 48, which tends to further highlight the fact in Fig. 3 that the visual focus is currently on the enlarged first icon 64B.

Fig. 4 depicts a third output 80 being displayed on the display 48. In Fig. 4, the first icon 64A has been returned to its default, i.e. relatively smaller, size but the second icon 68B has been redisplayed in an enlarged form when compared with the second icon 68A of Fig. 3. The second icon 68B, being enlarged in Fig. 4, occupies at least a portion of the space 66 that had existed between the first and second icons 64A and 68A when displayed at their default size in Fig. 1.

It thus can be seen from Figs. 1, 3, and 4 that as the visual focus changes from one visual object, i.e., icon 56, on the display 48 to another, the particular icon 56 that is currently the subject of the visual focus is redisplayed from its default size to an enlarged size. The enlarged size of the particular icon 56, along with the relatively smaller spacing between the particular icon 56 and the icons 56 adjacent thereto, advantageously provide to a user two visual indications that the particular icon 56, and the routine 44 which the particular icon 56 represents, is the subject of the visual focus.

It is noted that the degree of enlargement of a visual object between the initial size and the enlarged size may be user-customizable. For instance, an ordinary user may desire to have the visual objects enlarged only to a nominal degree, such as might be depicted in Figs. 1, 3, and 4. Another user, such as one which is visually impaired or otherwise impaired, might desire that the enlarged visual objects have a much greater degree of enlargement. For instance, Fig. 4A depicts the second icon 68BB enlarged to a substantially greater degree than the enlarged second icon 68B in Fig. 4. That is, the second icon 68A in Fig. 3 might be enlarged to the size of the second icon 68BB in Fig. 4A upon the visual focus being on the second icon 68BB. Depending upon the degree of enlargement of a visual object, the enlarged visual object might overlap at least a portion of an adjacent visual object, such as is the case in Fig. 4A. In such a situation, it might be desirable to depict the highly enlarged second icon 68BB in such a fashion that at least a portion of it appears to be at least partially transparent so as to enable at least a portion of the overlapped region of an adjacent icon 56 to be viewed by the user.

As the visual focus is shifted from one icon 56 to another icon 56, the another icon 56 is redisplayed in enlarged form, which indicates that it is now the subject of the visual focus, and the one icon 56 is redisplayed from its enlarged size to its default, i.e., relatively smaller, size indicating that the visual focus is no longer on the one icon 56. While Figs. 1, 3 and 4 suggest that successive navigational inputs by the track wheel 24 in the direction indicated at the numeral 28 cause the visual focus to shift in a left-right, i.e., east-west direction, it is noted that other navigational inputs or other inputs from the track wheel 24 or from other input members of the input apparatus 8, whether or not expressly depicted herein, can cause the visual focus to be shifted in an up-down, i.e., north-south direction or in other directions among the icons 56.

For instance, the visual objects need not be in the grid pattern of the icons of Fig. 1, and the visual objects rather could be in numerous other arrangements. A track ball input device would allow navigation to any Cartesian coordinate on the display 48. Also, the visual objects need not be limited to the icons 56, and rather could be any visual object on the display 48. For example, many handheld electronic devices have a battery level indicator that could usefully be enlarged in accordance with the disclosed and claimed concept. Similarly, a handheld electronic device having a wireless communication capability likely would have a signal strength indicator which could similarly be enlarged in accordance with the disclosed and claimed concept.

It is noted that the visual objects need not be the same size. Even in the situation of the icons 56, which all appear in Figs. 1, 3, and 4 to have the same initial size, could have different initial sizes. For instance, certain icons 56 for routines 44 that might be used with more frequency by the user could have a larger initial size than other icons 56 for routines 44 that are less frequently used. In such a situation, enlargement of the various visual objects could be handled in various ways. For instance, the enlarged size of each visual object could be a certain percentage in excess of its initial size, regardless of the specific initial size. Alternatively, all of the visual objects of different initial sizes could all be of the same enlarged size. Other alternatives will be readily apparent.

Fig. 4B depicts another type of visual object that can be enlarged from an initial size to an enlarged size. Specifically, Fig. 4B depicts a menu 92 having a plurality of menu items 96. In the exemplary embodiment depicted herein, the menu items 96 serve as visual objects that are enlarged from an initial size to an enlarged size when the visual focus is thereon.

It is noted that the subject of the visual focus can be indicated in alternative or additional ways. For instance, a visual object that is the subject of the visual focus could appear in color whereas the other visual objects appear in grayscale. Similarly, a visual object that is the subject of the visual focus could appear in relatively brighter colors than the colors of the other visual objects. A visual object that is the subject of the visual focus could be depicted at a higher level of brightness than the other visual objects. Similarly, a visual object that is the subject of the visual focus could appear at a higher level of contrast than the other visual objects. For instance, such higher contrast could be with respect to the background of the display 48, other visual objects on the display 48, or with respect to any other reference. Any one or more of these can be used to highlight a visual object that is the subject of the visual focus, whether or not the visual object additionally is being depicted in an enlarged form.

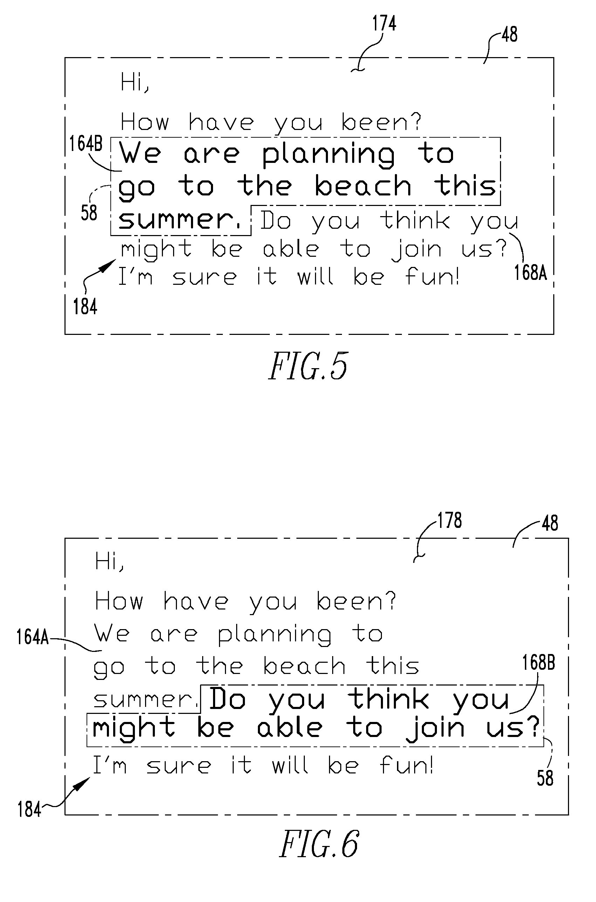

Figs. 5 and 6 depict other outputs on the display 48. Specifically, Fig. 5 depicts on the display 48 one output 174 that comprises a quantity of text 184. Such a quantity of text 184 could be provided as part of a text input routine 44, and e-mail routine 44, a web browser routine 44, or any of a number of other routines 44. Fig. 5 depicts a first sentence 164B of the quantity of text 184 being displayed in a font that is relatively larger than the other portions of the text in the quantity of text 184. For example, the quantity of text 184 might be output on the display 48 with a default size of twelve point type. The passage of text that is the subject of the visual focus, i.e., the first sentence 164B in Fig. 5, may be displayed in sixteen point type. That is, the first sentence 164B is output in sixteen point type, and a second sentence 168A adjacent the first sentence 164B is output in twelve point type. The first sentence 164A and 164B, and the second sentence 168A and 168B, are visual objects on the display 48.

Fig. 6 depicts on the display 48 another output 178 wherein the visual focus has shifted from the first sentence 164A to the second sentence 168B. In shifting the visual focus from the first sentence 164A to the second sentence 168B, the first sentence 164B of Fig. 5 is redisplayed in its default, i.e., smaller, font size as the first sentence 164A in Fig. 6, and the second sentence 168A in Fig. 5 is redisplayed with a relatively larger font as the enlarged second sentence 168B in Fig. 6.

The shifting of the visual focus from the first sentence 164B in Fig. 5 to the second sentence 168B in Fig. 6 may have resulted from a navigational input from the track wheel 24, such as by rotation in the direction indicated at the numeral 28, or could have resulted from other navigation inputs and/or selection inputs. With each such successive navigation input, for example, a successive passage in the quantity of text 184 is enlarged. The particular passages employed herein are sentences, i.e., the first sentence 164B of Fig. 5 and the second sentence 168B of Fig. 6, within the quantity of text 184. Each sentence represents a complete thought or expression within the quantity of text 184. By successively enlarging such successive passages in the quantity of text 184, sentences in the present example, the successively enlarged visual objects are successive complete thoughts within the quantity of text 184. However, other types of passages of text may be successively enlarged, i.e., clauses within the text between punctuation marks, predetermined phrases, and the like.

The successive enlargement allows the user to quickly read the enlarged text and to perceive its meaning on the basis of consecutive complete thoughts that are successively perceived by the user. The system enables the user to enlarge successive passages, i.e., sentences in the present example, and further allows the user to quickly scroll through a quantity of text to a desired passage for selective enlargement of the passage. Such enlargement occurs automatically when the visual focus is on a particular passage, i.e., the sentence of the present example.

The output apparatus 16 of the handheld electronic device may also comprise an audio output, and the routines 44 may include a voice synthesis routine 44 that can convert text into an audible output that is representative of the passage of text being spoken. Such a configuration is particularly useful for users who are visually impaired or otherwise impaired. Such a system also could be configured to audibly output a spoken expression representative of another visual object such as an icon 56 or other visual object when it is the subject of the visual focus. For instance, the system might output an audible output of the spoken word "telephone" when a telephone icon 56 is the subject of the visual focus.

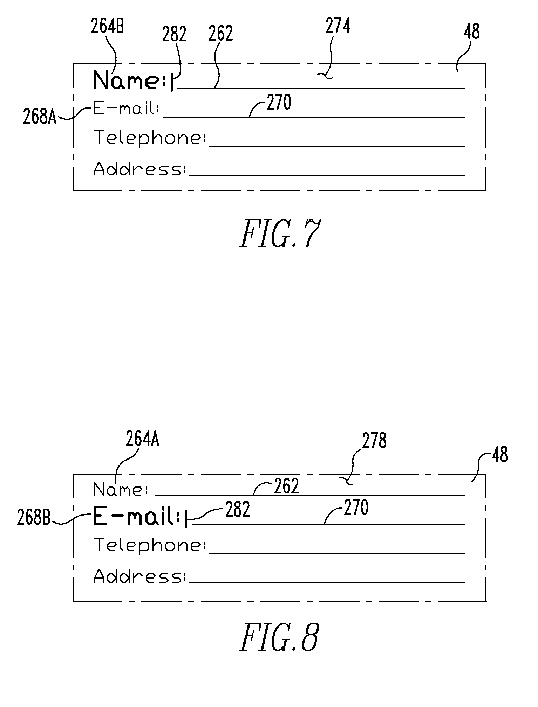

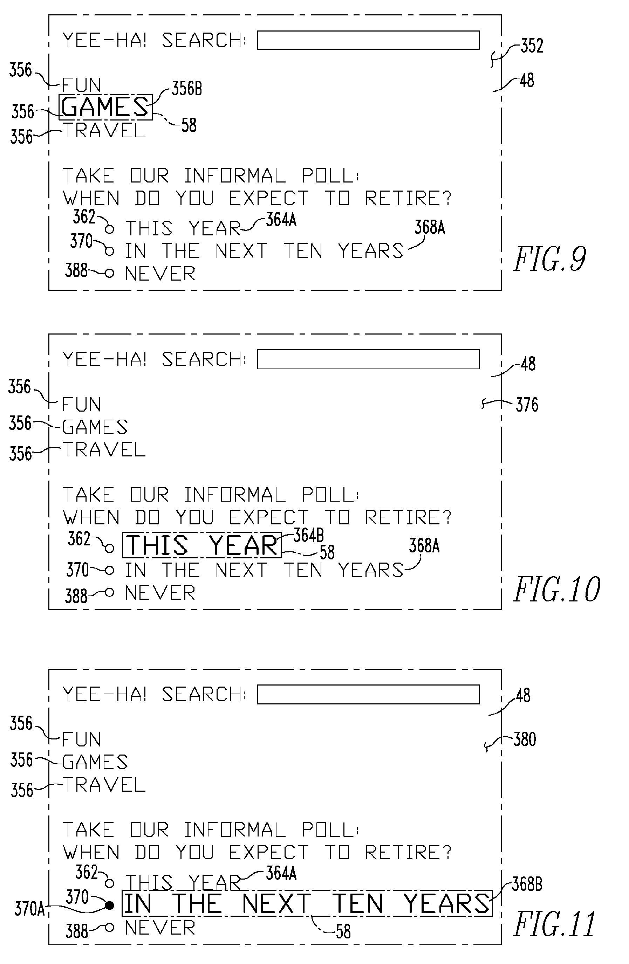

Addition outputs on the display 48 are depicted in Figs. 7 and 8. Fig. 7 depicts one output 274, such as an output of an address book routine 44 or other routine 44, having a plurality of input fields and a label for each such input field. For instance, the one output 274 comprises a name input field 262 and a name label 264B that are associated with one another. The name label 264B in Fig. 7 is displayed in a font that is slightly enlarged when compared with the other labels in the one output 274.

For instance, the one output 274 additionally includes an e-mail input field 270 and, associated therewith, an e-mail label 268A which is depicted in the one output 274 as being of a relatively smaller font than that of the name label 264B. The name label 264B being displayed in the one output 274 with a larger font than that of the e-mail label 268A indicates that an input focus of the system is on the name input field 262. Hereinafter, the expression "input focus" and variations thereof shall refer broadly to a visual object, such as in a graphical user interface (GUI), that is currently capable of being the subject of an input by a user. That is, the input focus of the system is on the name input field 262 and, since the name input field 262 and the name label 264B are associated with one another, the displaying of the name label 264B with an enlarged font visually indicates to a user that the input focus of the system is on the name input field 262. A cursor 282 in the name input field 262 further illustrates that the input focus is on the name input field 262.

Fig. 8 depicts on the display 48 another output 278 wherein the e-mail label 268B is shown as an enlarged version of the e-mail label 268A of Fig. 7. This visually indicates to a user that the input focus in Fig. 8 is on the e-mail input field 270 since the e-mail input field 270 and the e-mail label 268B are associated with one another. Since the input focus had shifted from the name input field 262 in Fig. 7 to the e-mail input field 270 in Fig. 8, the enlarged name label 264B of Fig. 7 was redrawn as the relatively smaller name label 264A at its default, i.e., relatively smaller, font size in Fig. 8, and the e-mail label 268A at its default, i.e., relatively smaller, font size in Fig. 7 was redrawn as the enlarged e-mail label 268B in Fig. 8. Such a shift in the input focus from the name field 262 in Fig. 7 to the e-mail input field 270 in Fig. 8 could have resulted from, for instance, a navigation input by the track wheel 24 in the direction indicated at the numeral 28, although other inputs could have been employed.

Since the address book routine 44 potentially can have a large number of input fields and, associated with each input field, a label, the ability to rapidly determine which input field is the subject of the input focus of the processor apparatus 12 is highly advantageous. As can be understood from Figs. 7 and 8, since a given input field and its label are associated with one another, whenever a given input field is the subject of the input focus, the associated label is made the subject of the visual focus and is displayed in an enlarged fashion at a font larger than the default font size.

Figs. 9-11 depict additional outputs on the display 48, such as might result from a web browser routine 44 or other routine 44. Specifically, Fig. 9 depicts on the display 48 a first output 352 comprising a plurality of clickable buttons 356. Each such clickable button might be representative of a uniform resource locator (URL) on a network or might initiate the execution of another routine 44, etc. One of the clickable buttons 356 is depicted as being an enlarged clickable button 356B, i.e., the "GAMES" button. Fig. 9 indicates that a user has entered sufficient navigational inputs to cause the visual focus of the processor apparatus 12 to be on the "GAMES" clickable button 356, thus resulting in such button being displayed as the enlarged clickable button 356B in an enlarged font compared with the font size of the other clickable buttons 356. Since the visual focus is on the enlarged clickable button 356, a select or click input of the track wheel 24, such as by translating the track wheel 24 in the direction indicated by the numeral 32, will initiate the action represented by the clickable button 356B.

A second output 376 is depicted on the display 48 in Fig. 10. In Fig. 10, all of the clickable buttons 356 are displayed in the same size font since the visual focus is not on any of the clickable buttons 356. Rather, an input focus is on a first selectable input field 362, and the visual focus is on the label 364B "THIS YEAR" which is depicted as being output in an enlarged font compared with its appearance as the label 364A "THIS YEAR" at the default, i.e., relatively smaller, font in Fig. 9. The first selectable input field 362 is one of a plurality of alternately selectable input fields comprising, for example, the first selectable input field 362, a second selectable input field 370, and a third selectable input field 388. The first selectable input field 362 and the label 364B "THIS YEAR" are associated with another, and the enlargement in Fig. 10 of the label 364B "THIS YEAR" compared with its appearance in Fig. 9 and compared the appearance of the other labels nearby in Fig. 10 indicates that the first selectable input field 362 is the subject of the input focus of the processor apparatus 12.

The first, second, and third selectable input fields 362, 370, and 388 are alternately selectable by the user. That is, as the input focus of the system shifts among the first, second, and third selectable input fields 362, 370, and 388, a selection input that occurs when the input focus is on a particular selectable input field will be considered to be a selection input with respect to the label associated with the particular selectable input field. As the input focus shifts among the first, second, and third selectable input fields 362, 370, and 388, the visual focus correspondingly shifts among and enlarges the associated labels.

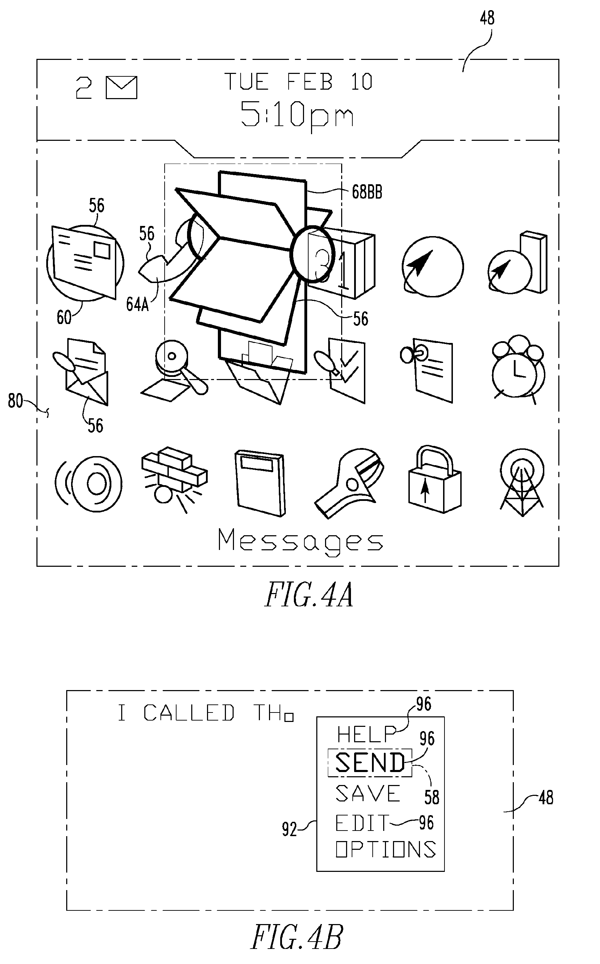

For instance, and as is depicted generally in Fig. 11, the label 368B "IN THE NEXT TEN YEARS" is depicted in a larger font size than in Fig. 10 and in larger font size than that of the other labels associated with the first and third selectable fields 362 and 388. Moreover, the second selectable field 370A in Fig. 11 is shown as being filled, i.e., as having had a selection input made in association therewith. Also, the label 364A "THIS YEAR" in Fig. 11 is redisplayed in at its default, i.e., relatively smaller, font size.

It thus can be seen that the input focus has shifted from the first selectable input field 362 in Fig. 10 to the second selectable input field 370 in Fig. 11, such as might result from a navigation input from the track wheel 24 in the direction indicated by the numeral 28. It can further be seen that the second selectable input field 370 has been the subject of a selection input, such as might have resulted from a selection input or click input of the track wheel 24 in the direction indicated at the numeral 32. By enlarging the label associated with a selectable input field that is the subject of the input focus of the system enables the user to more readily determine which selectable input field is the subject of the input focus and thus can potentially be the subject of a selection input. This facilitates use of the handheld electronic device 4.

It is noted that functions or routines 44 on the handheld electronic device 4 can be represented by an icon 56, a symbol, one or more characters, or any other graphic representation in any of a wide variety of forms. As such, the representation herein of icons 56, clickable buttons 356, and the like is exemplary and is not intended to be limiting.

While specific embodiments of the disclosed and claimed concept have been described in detail, it will be appreciated by those skilled in the art that various modifications and alternatives to those details could be developed in light of the overall teachings of the disclosure. Accordingly, the particular arrangements disclosed are meant to be illustrative only and not limiting as to the scope of the disclosed and claimed concept which is to be given the full breadth of the claims appended and any and all equivalents thereof.

## Claims

1. A method of outputting a number of visual objects on a display of a handheld electronic device, the method comprising:
depicting as a first output on the display:
a first visual object at an initial size, and
a second visual object at an initial size;
making a determination that a focus of the handheld electronic device is on a predetermined visual object; and
responsive to said determination, depicting as a second output on the display:
an enlarged version of at least a portion of the first visual object, and
at least a portion of the second visual object at the initial size.

2. The method of Claim 1, further comprising:
depicting as at least a portion of the first output:
the first visual object disposed at a first location on the display,
the second visual object disposed at a second location on the display, and
a space disposed between the first and second visual objects; and depicting as at least a portion of the second output:
the enlarged version of at least a portion of the first visual object disposed at the first location and occupying at least a portion of the space, and
the second visual object disposed at the second location.

3. The method of Claim 2, further comprising:
making a determination that the focus has shifted from the predetermined visual object to another visual object;
responsive to said making a determination, depicting as a third output on the display:
the first visual object at the initial size and disposed at the first location, and
an enlarged version of at least a portion of the second visual object disposed at the second location and occupying at least a portion of the space.

4. The method of Claim 3, further comprising employing as the predetermined visual object the first visual object, and employing as the another visual object the second visual object.

5. The method of Claim 1, further comprising depicting as at least a portion of the first output a quantity of text, depicting as the first visual object a first passage in the quantity of text, and depicting as the second visual object a second passage in the quantity of text.

6. The method of Claim 5, further comprising depicting as the first passage a first sentence in the quantity of text, and depicting as the second passage a second sentence in the quantity of text.

7. The method of Claim 1, further comprising employing as the focus on a predetermined visual object an input focus on a predetermined input field, and depicting as the first visual object a label of the predetermined input field.

8. The method of Claim 7, further comprising depicting as the second visual object a label of another input field that is disposed adjacent the predetermined input field.

9. The method of Claim 1, further comprising employing as the predetermined visual object a predetermined icon, depicting as the first visual object the first icon, and depicting as the second visual object a second icon.

10. The method of Claim 1, further comprising employing as the predetermined visual object the first visual object.

11. The method of Claim 1 wherein the first output comprises a menu having a plurality of menu items, and further comprising employing as the predetermined visual object a predetermined menu item, depicting as the first visual object the first menu item, and depicting as the second visual object a second menu item.

12. The method of Claim 1, further comprising outputting as the enlarged version of at least a portion of the first visual object an overlapping visual object that at least partially overlaps at least a portion of the second visual object.

13. The method of Claim 12, further comprising outputting as the overlapping visual object a visual object that appears to be at least partially transparent at the edges to permit at least a portion of the overlapped region of the second visual object to be visually detected.

14. The method of Claim 1, further comprising outputting as the enlarged version of at least a portion of the first visual object a visual object that additionally is highlighted in comparison with the second visual object in terms of at least one of:
color;
brightness; and
contrast.

15. The method of Claim 1, further comprising making as at least a portion of said determination a determination that the focus has remained on the predetermined visual object for a predetermined period of time.

16. The method of Claim 1, further comprising outputting as the enlarged version of at least a portion of the first visual object a version of the first visual object that has been enlarged in accordance with a user-specified degree of enlargement from among a plurality of user-specifiable degrees of enlargement.

17. The method of Claim 1, further comprising outputting an audible output that is representative at least in part of the first visual object.

18. The method of Claim 17, further comprising depicting as the first visual object a passage of text, and outputting as the audible output a representation of the passage of text being spoken.

19. The method of Claim 1, further comprising outputting as the enlarged version of at least a portion of the first visual object a visual object that is depicted as progressively changing in size between the initial size and the enlarged size.

20. A handheld electronic device comprising:
a processor apparatus comprising a processor and a memory;
an input apparatus structured to provide input to the processor apparatus;
an output apparatus comprising a display and being structured to receive output signals from the processor apparatus and to responsively provide visual output;
the memory having stored therein at least a first routine comprising instructions which, when executed on the processor, cause the handheld electronic device to perform operations that comprise:
depicting as a first output on the display:
a first visual object at an initial size, and
a second visual object at an initial size;
determining that a visual focus of the handheld electronic device is on a predetermined visual object; and
responsive to said determining, depicting as a second output on the display:
an enlarged version of at least a portion of the first visual object, and
at least a portion of the second visual object at the initial size.
